# EUROPÄISCHE PATENTSCHRIFT

(11) **EP 4 527 796 B1**
(45) Veröffentlichungstag und Bekanntmachung des Hinweises auf die Patenterteilung: **10.06.2026**
(21) Anmeldenummer: 23199051.6
(22) Anmeldetag: 22.09.2023
(51) Int. Cl.: C01B 25/10, C01G 49/10, C22B 26/12, H01M 10/54, C22B 3/16, C22B 3/44, C22B 7/00, H01M 4/58

(54) **RÜCKGEWINNUNG VON PHOSPHOROXYCHLORID UND EISENCHLORID AUS EISENPHOSPHATHALTIGEN MATERIALIEN**
RECOVERY OF PHOSPHORUS OXYCHLORIDE AND FERRIC CHLORIDE FROM MATERIALS CONTAINING IRON PHOSPHATE
RÉCUPÉRATION D'OXYCHLORURE DE PHOSPHORE ET DE CHLORURE FERRIQUE À PARTIR DE MATÉRIAUX CONTENANT DU PHOSPHATE FERRIQUE

(43) Veröffentlichungstag der Anmeldung: 26.03.2025
(73) Patentinhaber: LANXESS Deutschland GmbH, 50569 Köln (DE)
(72) Erfinder: BOLL, Matthias, 51061 Köln (DE)

(56) Entgegenhaltungen:
- WO-A2-2010/084509
- DE-C- 332 118
- DATABASE WPI Week 201770, Derwent World Patents Index; AN 2017-663299, XP002811282

## Beschreibung

Die Erfindung betrifft ein Verfahren zur Wiedergewinnung von Phosphoroxychlorid und Eisenchlorid aus Eisenphosphat-haltigen Materialien.

Lithiumeisenphosphat (LFP) und Lithiumeisenmanganphosphat (LFMP) sowie ihre ggf. mit weiteren Elementen, insbesondere Metallen dotierten Modifikationen sind als Kathodenmaterialien - auch als cathode active materials (CAM) bezeichnet - für Batterien bekannt und werden bevorzugt in Elektrofahrzeugen und stationären Batterien eingesetzt.

Da der Lithium-Ionen-Batteriemarkt stark wächst, und da in jeder Autobatterie zwischen 100kg und 200kg CAM enthalten ist, ist auch die Masse an wertvollen Bestandteilen wie Lithium, Phosphor und Eisen sowie anderen Inhaltsstoffen groß, womit das Recycling solcher Altbatterien zur Rückgewinnung dieser Rohstoffe sehr wichtig ist. Eine besondere Bedeutung kommt hier dem Lithium zu, einem Element, das in den vergangenen Jahren immer stärker nachgefragt wurde. Ebenfalls wichtig ist der enthaltende Phosphor, der in vielen Regionen der Welt als kritischer Rohstoff angesehen wird.

Bei dem Recyclingvorgang werden üblicherweise die Batteriezellen soweit möglich mechanisch zerlegt und der Rest, enthaltend das Kathoden- und Anodenmaterial, ggf. Binder und weitere Bestandteile, zu einer Masse zerkleinert, die aufgrund des dunklen LFP und des kohlenstoffhaltigen, insbesondere graphithaltigen Anodenmaterials schwarz ist und daher "Schwarze Masse" genannt wird. Die Schwarze Masse kann bedingt durch eine technisch unvollständige Trennung auch Reste anderer Batteriebestandteile, beispielsweise Metalle, enthalten.

In der Literatur werden dabei verschiedene Ansätze zum Recycling der LFP-haltigen Schwarzen Masse bzw. des reinen, verbrauchten LFP vorgeschlagen. So wird beispielsweise das verbrauchte LFP-haltige Material in Qifang Sun et al, Journal of Alloys and Compounds 818, (2020), 153292 thermisch behandelt, wobei ein Li-armes Material entsteht, das durch entsprechende Zugabe von Li-Carbonat und einer Kohlenstoffquelle wieder in LFP überführt werden soll. Das erhaltene Li-arme Ausgangsprodukt ist jedoch sehr unbestimmt, woraus ein entsprechend unbestimmtes LFP resultiert. Das gleiche gilt auch für das Verfahren nach Lingyu Guan et. al. in Renewable Energy, 175 (2021), 559-567, bei dem das bei dem Recycling befreite LFP zusammen mit speziellen Li-, Fe-, und P-Edukten und einer Kohlenstoffquelle zu einem Gemisch aus altem und neuem LFP führt, welches ebenfalls schwer zu spezifizieren ist.

Andere Verfahren oxidieren das im LFP enthaltene Eisen(II) auf unterschiedlichen Wegen, wie etwa mit Hypochlorid oder Peroxodisulfat oder H₂O₂ in Gegenwart von Säuren zu Eisen(III) und extrahieren das aus der Kristallform freigesetzte Lithium. Letzteres wird zum Beispiel in Yang, Yongxia; Meng, Xiangqi; Cao, Hongbin; Lin, Xiao; Liu, Chenming; Sun, Yong; Zhang, Yi; Sun, Zhi, Green Chemistry 20/13, (2018), 3121-3133 beschrieben. Das ebenfalls anfallende, üblicherweise verunreinigte Eisenphosphat (FP) lässt sich aber zur Herstellung von LFP aufgrund von vorhandenen Verunreinigungen nur eingeschränkt einsetzen.

In CN107180999 wird ein Verfahren zur Aufarbeitung von LFP beschrieben, wobei LFP mit Chloriden, vorzugsweise MgCl₂, gemischt und zunächst bei 400°C kalziniert wird. Danach wird das erhaltene Produkt bei 400°C mit Chlorgas umgesetzt, wobei ein Abgasstrom entsteht, der offensichtlich ausschließlich Fe(III)Chlorid enthält, welches aus dem Abgasstrom durch Resublimation abgeschieden wird. Der Rückstand wird mit Wasser aufgenommen, wobei sich LiCI löst und im Filtrat befindet und Mg-Phosphat oder ein anderes Erdalkaliphosphat im festen Filterrückstand befindet.

Aus US2011/0256040A1 (=WO2010/084509) ist ein zweistufiges Verfahren einer Umsetzung von Phosphaten zu Phosphorchloriden wie PCl₃ und PCl₅ bekannt. Während in der 1. Stufe das Phosphat zusammen mit einer C-Quelle und Silica bei wenigstens 1100°C zu Phosphor bzw. P₂O₅ umgesetzt wird, erfolgt eine Chlorierung zu Phosphorchloriden eben dieser gebildeten Produkte erst in einer zweiten Stufe. Phosphoroxichlorid wird aber darin nicht beschrieben.

In DE-C-332118 wird eine zweistufige Reaktion ausgehend von Schlacke beschrieben, bei der in einem ersten Schritt glühendflüssige Schlacke mit Chlor allein oder in Kombination mit CO umgesetzt wird, wobei Eisen und Mangan in Form ihrer Chloride gebildet und durch Resublimation abgetrennt werden. Die sodann eisenfreien Phosphor-haltige Schlacke wird weiter mit Chlor und einer C-Quelle bei 700-800°C zu POCl₃ umgesetzt.

Durch die ausschließliche Wiedergewinnung des Lithiums in den oben genannten Verfahren wird nur ein geringer Massenanteil des eingesetzten LFP einer Wiederverwendung zugeführt, wodurch die Frage des LFP- und LFMP-Recyclings als ungelöst betrachtet werden kann.

Die Verfahren, bei denen Lithium aus LFP und/oder LFMP oder einer diese enthaltenden Schwarzen Masse abgetrennt wird, haben gemeinsam, dass ein anteilsmäßig großer, mehr oder weniger reiner Rückstand an Eisenphosphat-haltigem Material verbleibt, der weiter aufgearbeitet werden muss.

Aufgabe der vorliegenden Erfindung war es daher, ein Verfahren zur Gewinnung von Phosphor- und Eisenverbindungen aus Eisenphosphat-haltigen Materialien zu finden, welches ohne große Abfallströme auskommt und somit eine Wiederverwertung von Eisenphosphat-haltigem Material, unabhängig von der Herkunft, ermöglicht.

Die Erfindung betrifft daher ein Verfahren zur Gewinnung von Phosphoroxychlorid und Eisenchlorid aus Eisenphosphat-haltigen Materialien, dadurch gekennzeichnet, dass man
i) ein Eisenphosphat-haltiges Material in Gegenwart einer Kohlenstoff-Quelle mit Chlorgas (Cl₂) bei einer Temperatur von 300 bis 900°C umsetzt und
ii) die gebildeten Chlorphosphorverbindungen Phosphoroxychlorid und ggf. Phosphortrichlorid und Eisenchlorid im Abgasstrom ableitet, und aus dem Abgasstrom Eisenchlorid, Phosphoroxychlorid und ggf. Phosphortrichlorid dadurch trennt, dass das Eisenchlorid durch Resublimation abgeschieden wird und
iii) die Chlorphosphorverbindungen Phosphoroxychlorid und ggf. Phosphortrichlorid durch Kondensation abgeschieden werden.

### Eisenphosphat und Eisenphosphat -haltiges Material

Unter Eisenphosphat im Sinne dieser Erfindung wird insbesondere eine Verbindung verstanden, die zu wenigstens 97 Gew.-%, besonders bevorzugt zu wenigstens 99,5 Gew.-% aus den Elementen Eisen, Phosphor, Mangan, Aluminium, Nickel, Titan und Sauerstoff, insbesondere aus den Elementen Eisen, Phosphor, Mangan und Sauerstoff und besonders bevorzugt aus den Elementen Eisen, Phosphor und Sauerstoff besteht, . Dabei können in der Kristallstruktur des Eisenphosphates im Sinne dieser Erfindung auch Gitterplätze des Eisens teilweise von einem oder mehreren der oben benannten Metallionen besetzt sein können. Die Eisenphosphate können auch als Hydrate vorliegen. Bevorzugt kann das Eisenphosphat Eisen(III)-phosphat FePO₄, insbesondere FePO₄·2H₂O, Eisen(II)-phosphat, insbesondere Fe₃(PO₄)₂·8H₂O und Eisen(III)-pyrophosphat, insbesondere Fe₄(P₂O₇)₃ sowie Verbindungen der allgemeinen Formel FeₓMe_{y}PO₄ sein, wobei unter Me Mangan, Aluminium, Nickel sowie Titan, insbesondere Mangan verstanden wird, wobei x zwischen 0<x≤3 und y zwischen 0≤y<2,5 liegt.

Besonders bevorzugt kann das Eisenphosphat Eisen(III)-phosphat FePO₄, insbesondere FePO₄·2H₂O, Eisen(II)-phosphat, insbesondere Fe₃(PO₄)₂·8H₂O und Eisen(III)-pyrophosphat, insbesondere Fe₄(P₂O₇)₃ sein.

Als Eisenphosphat-haltiges Material wird für das erfindungsgemäße Verfahren insbesondere ein Material verwendet, enthaltend einen Anteil von 5 bis 100 Gew.-%, vorzugsweise 40 bis 99 Gew.-%, insbesondere 50 bis 99 Gew.-%, besonders bevorzugt von 70 bis 99 Gew.-% an Eisenphosphat.

Bevorzugt wird ein Material verwendet, enthaltend einen Anteil von 5 bis 100 Gew.-%, vorzugsweise 40 bis 99 Gew.-%, insbesondere 50 bis 99 Gew.-%, besonders bevorzugt von 70 bis 99 Gew.-% an wenigstens einem Eisenphosphat aus der Gruppe bestehend aus Eisen(III)-phosphat FePO₄, Eisen(II)-phosphat, insbesondere Fe₃(PO₄)₂·8H₂O, FePO₄·2H₂O und Eisen(III)-pyrophosphat, insbesondere Fe₄(P₂O₇)₃ oder FeₓMe_{y}PO₄, wobei unter Me Mangan, Aluminium, Nickel sowie Titan, insbesondere Mangan verstanden wird und x zwischen 0<x≤3 und y zwischen 0≤y<2,5 liegt.

Vorzugsweise beträgt der Anteil an LFP und LFMP in dem Eisenphosphat-haltigem Material weniger als 1 Gew.-%.

Bevorzugt ist die Beschreibung der Zusammensetzung des eingesetzten Materials auch über die Bestimmung des Gewichtsanteils bestimmter Elemente in dem eisenphosphathaltigen Material möglich, jeweils bezogen auf die Menge an Eisenphosphat-haltigem Material, wobei das eingesetzte Material vorzugsweise enthält:
1 bis 38 Gew.-% Fe,
1 bis 30 Gew.-% P,
0 bis 35 Gew.-% Mn,
0 bis 35 Gew.-% Al,
0 bis 35 Gew.-% Ni,
0 bis 35 Gew.-% Ti,
0 bis 55 Gew. %, vorzugsweise 0 bis 40 Gew.-%, insbesondere 1 bis 30 Gew.-% Kohlenstoff.

Diese Mengen können einerseits aus dem Eisenphosphat selbst, aber auch von den übrigen Bestandteilen des eingesetzten Materials stammen, wie beispielsweise aus Resten metallischer Bestandteile oder aus Teilen der Anode, wie sie in der Schwarzen Masse auch noch nach dem Herauslösen von Li enthalten sein können. Auch können weitere Dotierungselemente enthalten sein. Die Bestimmung der elementaren Anteile erfolgt vorzugsweise über die klassischen Methoden für die Elementaranalyse.

Das eingesetzte Eisenphosphat-haltige Material besitzt vorzugsweise einen Wassergehalt von weniger als 1 Gew.-%.

Das eingesetzte Eisenphosphat-haltige Material wird vorzugsweise als Rückstand einer Umsetzung von LFP und/oder LFMP oder eine diese enthaltende Schwarze Masse vorzugsweise mit H₂O₂ in Gegenwart einer Säure, vorzugsweise einer C₁-C₁₀-Carbonsäure, insbesondere aliphatischen Carbonsäure, besonders bevorzugt Essigsäure, erhalten, wodurch das LFP und/oder LFMP-haltige Material weitgehend von Lithium befreit wurde und vorzugsweise einen Li-Gehalt von kleiner als 2 Gew.-%, insbesondere kleiner als 1 Gew.-%, bezogen auf das Material aufweist. Eine solche Umsetzung erfolgt vorzugweise bei Temperaturen von 20 bis 90°C.

Die Gewinnung des Rückstands erfolgt vorzugsweise über Stunden bis Tage durch kontinuierliche Extraktion des Eisenphosphat-haltige Material.

Auch Metalle, bevorzugt von 0 bis 15 Gew.-%, vorzugsweise 0 bis 5 Gew.-%, insbesondere Al, Cu, Co und Ni können in dem eingesetzten Material enthalten sein.

Bevorzugt ist, dass das eingesetzte Eisenphosphat-haltige Material vorzugsweise weniger als 10 Gew.-%, insbesondere weniger als 1 Gew.-%, besonders bevorzugt weniger als 0,1 Gew.-% an Polymerpartikel, insbesondere Plastik, enthält.

Auch ist es bevorzugt, wenn das eingesetzte Eisenphosphat-haltige Material weniger als 5 Gew.-% an PVDF (Polyvinylidenfluorid) und/oder anderer Binder wie beispielsweise Carboxymethylcellulose oder Alginate enthält. Bevorzugt ist der Gehalt an allen Bindern kleiner 5 Gew.-%.

Bevorzugt beträgt der VOC-Gehalt des eingesetzten Eisenphosphat-haltigen Materials weniger als 1 Gew.-%, insbesondere weniger als 0,1 Gew.-%, besonders bevorzugt weniger als 0,01 Gew.-%. Unter VOC (volatile organic compounds) werden vorzugsweise organische Verbindungen mit Siedepunkten im Bereich von 50 bis 260°C, bei einem Standarddruck von 101,3 kPa, verstanden.

Das eingesetzte Eisenphosphat-haltige Material hat vorzugsweise eine mittlere Teilchengröße von 0,1 µm bis 10 mm. Die Teilchengröße kann, je nach Dimension, einfach über eine Siebung bestimmt werden oder für kleinere Teilchen über die Methode der Laserbeugung respektive Laserstreuung; die jeweils am besten einzusetzende Methode ist dem Fachmann bekannt.

Sofern das eingesetzte Eisenphosphat-haltige Material einen Binderanteil von größer als 1 Gew.-%, bezogen auf das Material, besitzt, erfolgt vorzugsweise eine Herauslösung durch eine Behandlung mit organischem Lösungsmittel, insbesondere Aceton, Ethylacetat, Methylethylketon, Tetrahydrofuran (THF), Acetessigsester, Acetylaceton, Dioxan und/oder Acetanhydrid sowie Mischungen davon, um den Gehalt auf weniger als 0,1 Gew.-% zu reduzieren.

Sofern das Eisenphosphat-haltige Material einen Polymeranteil, insbesondere Plastik, von größer als 1 Gew.-% enthält, ist es vorteilhaft, das Material zunächst einer thermischen Behandlung bei einer Temperatur von 300 bis 600°C zu unterziehen, vorzugsweise unter Inertgas, um den Polymeranteil auf weniger als 0,1 Gew.-% zu reduzieren. Ein möglicher Binderanteil von größer als 1 Gew.-% kann neben einer Herauslösung mit organischen Lösungsmitteln alternativ oder zusätzlich ebenfalls durch eine thermische Behandlung bei einer Temperatur von 300 bis 700°C, vorzugsweise unter Inertgas, auf weniger als 0,1 Gew.-% reduziert werden.

### Kohlenstoffquelle

Als Kohlenstoffquelle kann grundsätzlich jede Modifikation des Kohlenstoffes wie etwa Graphit, Ruß, Kohle, Koks, Aktivkohle, aber auch kohlenstoffhaltige Gase wie Kohlenmonoxid, Methan oder Phosgen genannt werden, aber auch flüssige Materialien wie Polyethylenglykol oder verschiedene Öle oder feste Materialen wie Bioabfälle oder Klärschlamm. Klärschlamm ist besonders bevorzugt. Dieser enthält vorzugsweise Kohlenstoff zu einem Anteil von wenigstens 5 Gew.-%, vorzugsweise von 20 bis 50 Gew.-%, bezogen auf die Trockenmasse.

Im Rahmen der vorliegenden Erfindung bezeichnet der Begriff "Klärschlamm" jede Suspension feinverteilter Partikel eines festen Substrats in einer Flüssigkeit. Vorzugsweise enthält der Klärschlamm einen Kohlenstoffgehalt, ausgedrückt in Gew.-% an elementarem Kohlenstoff, von wenigstens 5 Gew.-% Kohlenstoff. In einer bevorzugten Ausführungsform ist die Flüssigkeit, in der die Partikel suspendiert sind, Abwasser wie hierin definiert. Unter dem Begriff "Abwasser" werden alle Flüssigkeiten wässriger und/oder organischer Natur bzw. deren Gemische verstanden, die keine Trinkwasserqualität im Sinne der Trinkwassernormen haben.

In einer besonderen Ausführungsform liegt der Klärschlamm als Primärschlamm, Rohschlamm, Überschussschlamm, als behandelter und/oder stabilisierter Klärschlamm (aerob/anaerob) vor.

Unter dem Begriff "Bioabfälle" versteht man alle organischen Abfälle tierischen oder pflanzlichen Ursprungs, die in einem Haushalt oder einer Fabrik anfallen und durch Mikroorganismen, boden-lebende Organismen oder Enzyme abgebaut werden können. Als solche können beispielsweise genannt werden Stroh, Sägemehl, Wachse, Fette sowie Vogelkot.

Die Kohlenstoffquelle kann dabei fest, flüssig oder gasförmig sein. Bevorzugt ist der Einsatz einer festen Kohlenstoffquelle.

Sollte der Kohlenstoffanteil in der Kohlenstoffquelle bei kleiner als 70 Gew.-% liegen, wird vorzugsweise vor der Umsetzung mit Chlorgas eine Pyrolyse durchgeführt. Diese wird vorzugsweise unter Inertgas wie Stickstoff bei Temperaturen von 250 bis 800°C, bevorzugt bei 350 bis 550°C durchgeführt, bis die Gasbildung von flüchtigen Komponenten weniger als 11/1kg eingesetzte Kohlenstoffquelle / Stunde beträgt.

Besonders bevorzugt wird als Kohlenstoffquelle Klärschlamm eingesetzt.

Bevorzugt beträgt der Chloridgehalt in der Kohlenstoffquelle, insbesondere bezogen auf sein Trockengewicht, weniger als 1 Gew.-%.

Sofern das eingesetzte Eisenphosphat-haltige Material, beispielsweise weil es als Rückstand aus der Li-Abreicherung von LFP und/oder LFMP oder insbesondere einer diese enthaltenden Schwarzen Massen stammt, bereits zumindest einen Teil der Kohlenstoffquelle enthält, dann enthält es insbesondere vorzugsweise 1 bis 55 Gew.-%, vorzugsweise 1 bis 40 Gew.-%, insbesondere 1 bis 30 Gew.-% an Kohlenstoff, insbesondere Graphit und/oder Ruß.

Bevorzugt beträgt die Summe an Eisenphosphat und Kohlenstoff, bezogen auf das Eisenphosphat-haltige Material, mehr als 70 Gew.-%, vorzugsweise mehr als 80 Gew.-%, besonders bevorzugt mehr als 90 Gew.-%.

Bevorzugt enthält das eisenphosphathaltige Material ein molares Kohlenstoff-zu-Phosphor-Verhältnis von größer gleich 1,5, vorzugsweise von 1,5 bis 20, besonders bevorzugt von 1,5 bis 10, insbesondere 1,5 bis 5, ganz besonders bevorzugt von 1,5 bis 4.

Sofern das eingesetzte Material weniger als 1,5 mol Kohlenstoff pro 1 mol Phosphor enthält, bezogen auf das im Material enthaltende Eisenphosphat, wird dem Material bevorzugt vor der Reaktion noch so viel Kohlenstoff zugesetzt, dass das gewünschte Verhältnis erreicht wird.

### Reaktor

Das nach dem erfindungsgemäßen Verfahren einzusetzende Material wird vorzugsweise in einen Reaktor gegeben, der vorzugsweise mit einer unter den einzustellenden Reaktionsbedingungen resistenten Schicht versehen ist. Bevorzugte Reaktormaterialien sind mit Nickel oder Graphit beschichtete Reaktoren oder Reaktoren aus Quarz. Also solche können Rohreaktoren wie Drehrohrreaktoren oder andere Reaktoren verwendet werden. Besonders bevorzugt sind Reaktoren, die eine Bewegung des Materials während der Reaktion erlauben, um eine möglichst effektive Kontaktaufnahme von Material und Chlorgas zu erlauben. Dabei sind Wirbelbettvorrichtungen, sowie Drehrohrreaktoren oder eine Reaktion in einer Extrudervorrichtung mit Schneckenvortrieb bevorzugt.

Im Falle eines Rohreaktors beträgt die Reaktorlänge vorzugsweise 0,2 bis 40 m. Die Verweilzeit im Reaktor während der Reaktion richtet sich in der Regel nach Temperatur und Kontaktmöglichkeit von Material zu Chlorgas. Dabei kann sich die Verweilzeit im Reaktor beispielsweise von einer Minute bis 10 Stunden hinziehen. Das erfindungsgemäße Verfahren kann als Batch oder kontinuierlich betrieben werden.

### Verfahren:

### Schritt i)

Die Umsetzung erfolgt bevorzugt unter Ausschluss von Luft. Eventuell im Reaktor enthaltene Luft wird zum Start der Reaktion vorzugsweise durch ein inertes Gas, zum Beispiel Stickstoff, verdrängt.

Die Umsetzung mit Chlorgas erfolgt bei einer Temperatur von 300 bis 900°C, insbesondere bei 350 bis 800 °C. Sofern das Verfahren bei einer Temperatur von 300 bis 320°C betrieben wird, ist es vorteilhaft, nicht vollständig aus dem Reaktor entwichenes Eisenchlorid durch eine nachträgliche Temperaturerhöhung auf 350 bis 400°C auszutreiben. Die Temperaturerhöhung erfolgt vorzugsweise, nachdem im Abgas der Gehalt an Phosphorverbindungen, gemessen mit Hilfe eines entsprechend in Gewichtsprozenten kalibrierten Gasphasen-IR-Spektrometers, weniger als 0,1 Gew.-%, insbesondere weniger als 0,01 Gew.-% beträgt.

Das Chlorgas kann dabei auf verschiedene Weise mit dem Material in Kontakt gebracht werden. Vorzugsweise wird Chlor über oder durch das Material geleitet, wobei das Material zur effektiven Umsetzung bevorzugt während der Reaktion bewegt wird. Dies kann in einem Drehrohrofen oder in einem Schaufeltrockner erfolgen, in dem das Material bewegt wird. Das Chlorgas kann auch durch das Material hindurchgeleitet werden, was beispielsweise in einem Wirbelbett oder Festbett erreicht werden kann. Gegebenenfalls kann zu diesem Zwecke das Material zuvor einer Formgebung, zum Beispiel Kompaktierung oder Pelletierung, unterzogen werden.

Vorzugsweise befindet sich an dem Reaktor ein Auslass für den Abgasstrom. In dem Abgasstrom befinden sich die gasförmigen Reaktionsprodukte, flüchtigen Bestandteile des Materials sowie überschüssiges Chlorgas, die zusammen aus dem Reaktionsraum abgeleitet werden können.

Die Reaktion ist vorzugsweise beendet, wenn der Anteil von Phosphorverbindungen, vorzugsweise gemessen mit Hilfe eines entsprechend in Gewichtsprozenten kalibrierten Gasphasen-IR-Spektrometers, weniger als 0,1 Gew.-%, insbesondere weniger als 0,01 Gew.-% beträgt.

### Schritt ii)

In dem Abgasstrom befindet sich neben den Chlorphosphorverbindungen Phosphoroxychlorid und ggf. Phosphortrichlorid, auch gasförmiges Eisen(III)chlorid, und ggf. auch AlCl₃, sofern Aluminium in dem eingesetzten Material enthalten ist.

### Schritt iii)

Bei einer Reaktionstemperatur von 300 bis 320°C ist der Anteil an Eisenchlorid im Abgasstrom in der Regel noch vergleichsweise klein und erhöht sich erst nach einer Temperaturerhöhung auf 350 bis 600°C. Eisen(III)chlorid und auch AlCl₃, sofern Aluminium in dem eingesetzten Material enthalten ist, lassen sich aus dem Abgasstrom vorzugsweise durch Resublimation an unterschiedlich kühlen Oberflächen abscheiden und voneinander trennen. Sofern das Eisenchlorid zusammen mit AlCl₃ im Abgasstrom vorhanden ist, können die jeweiligen Chloride aufgrund genügend unterschiedlicher Siedepunkte auch fraktioniert an verschiedenen Oberflächen mit unterschiedlichen Temperaturen resublimiert und dadurch sehr sauber getrennt werden.

Bevorzugte Abscheidetemperaturen sind für FeCl₃ kleiner gleich 307°C, insbesondere bei 150 bis 300°C und für AlCl₃ kleiner gleich 150°C, insbesondere bei 110 bis 149°C.

Das nach dem erfindungsgemäßen Verfahren wiedergewonnene Eisen in Form von Eisen(III)chlorid kann gegebenenfalls von anhaftenden Chlorphosphorverbindungen getrennt werden. Dies kann geschehen durch Behandlung mit Säure wie etwa Schwefelsäure, vorzugsweise konzentrierte Schwefelsäure oder durch einen thermischen Trocknungsschritt oder auf andere, dem Fachmann bekannte Weise erfolgen. Bevorzugt wird das aus dem in Schritt iii) isolierte Eisenchlorid mit Schwefelsäure umgesetzt wobei gegebenenfalls vorhandene Chlorphosphorverbindungen freigesetzt und dann ggf. kondensiert werden.

Es kann dann in die gewünschte Rohstoffform des Eisens beispielsweise für die Herstellung von LFP und/oder LFMP überführt werden. Als Beispiele sind hier das Eisensulfat, Eisennitrat, Eisenphosphat oder die unterschiedlichsten Formen des Eisenoxids zu nennen.

Alternativ kann das Eisenchlorid, auch ohne dass es durch Resublimation abgeschieden wurde, direkt als Gasstrom in ein wässriges Medium, enthaltend Schwefelsäure oder Salpetersäure, eingeleitet werden und dadurch zur Bildung entsprechender Eisen(III)sulfate, oder -nitrate gebracht werden. Ggf. wird bei der Umsetzung ein geeignetes Reduktionsmittel mitverwendet, um zu einem Eisen(II)sulfat, Eisen(II)nitrat bzw. Eisen(II)phosphat zu gelangen.

Bevorzugt ist jedoch die Abtrennung von Eisenchlorid aus dem Abgasstrom durch Resublimation.

### Schritt iv)

Bei dem erfindungsgemäßen Verfahren können die Chlorphosphorverbindungen Phosphoroxychlorid und ggf. ebenfalls gebildetes Phosphortrichlorid, vorzugsweise mittels eines Kondensators, dem Abgasstrom entnommen werden und ggf. überschüssiges Chlorgas zurückgeführt werden.

Aus dem Abgasstrom wird das bei Reaktionstemperatur gasförmige Phosphoroxychlorid und das ggf. ebenfalls gebildete Phosphortrichlorid mittels eines Kondensators abgetrennt. In der Regel bildet sich ein Gemisch aus Phosphoroxychlorid und Phosphortrichlorid, welches hinsichtlich seiner Komponenten weiter destillativ aufgetrennt werden kann. Dadurch sind die Phosphorkomponenten in sehr reiner Form zu gewinnen.

Bevorzugt ist das erfindungsgemäße Verfahren dadurch gekennzeichnet, dass der aus dem Schritt ii) abgeleitete Abgasstrom Phosphortrichlorid enthält und dieses als phosphortrichloridhaltige Chlorphosphorverbindungen aus Schritt iv) oder nach Separation daraus mit Chlorgas bei einer Temperatur von 20 bis 160°C zu Phosphorpentachlorid umgesetzt wird.

Bevorzugt ist dabei ein molares Chlor/Phosphortrichlorid-Verhältnis von 1 : 20.

Bevorzugt ist das erfindungsgemäße Verfahren zur Wiedergewinnung von Phosphorverbindungen in Form von Chlorphosphorverbindungen, insbesondere in Form einer Mischung von Phosphoroxychlorid und Phosphortrichlorid.

Phosphoroxychlorid kann über einen Hydrolyseschritt in Polyphosphorsäure oder Phosphorsäure überführt werden, woraus je nach Bedarf durch Neutralisation ihre Salze hergestellt werden, die gegebenenfalls dann erneut zur Herstellung von LFP und/oder LFMP eingesetzt werden können.

Phosphoroxychlorid und Phosphortrichlorid fallen im Abgasstrom üblicherweise in einem Gewichtsverhältnis von 10 zu 1 bis 1 zu 10 an.

Die Chlorphosphorverbindungen Phosphoroxychlorid und ggf. Phosphortrichlorid aus dem erfindungsgemäßen Verfahren kann man zugunsten des Phosphortrichlorid und damit zu dem bevorzugten Edukt für die Phosphorpentachlorid-Bildung fahren, in dem man das Verfahren vorzugsweise oberhalb von 500°C durchführt. Ebenfalls bevorzugt ist es, das Verfahren bei einem Kohlenstoff/Phosphor-Verhältnis von größer als 3 mol/mol durchzuführen. Auf diese Weise kann man das Verhältnis von Phosphortrichlorid/Phosphoroxychlorid von größer als 1 bringen.

Sofern das erfindungsgemäße Verfahren ohne stöchiometrischen Chlorüberschuss betrieben wird und sich somit wenig bis kein Chlor im Abgasstrom befindet, kann der die Chlorphosphorverbindungen Phosphoroxychlorid und ggf. Phosphortrichlorid enthaltende Abgasstrom, vorzugsweise, nachdem er von Eisenchlorid befreit wurde, auch in eine wässrige Lösung eingeleitet werden, um die entsprechenden Säuren des Phosphors wie Phosphorsäureestern und Phosphonsäuren zu erhalten, aus denen dann ggf. weitere Phosphorderivate hergestellt werden können.

Nach Beendigung des erfindungsgemäßen Verfahrens befinden sich im Rückstand alle unter Reaktionsbedingungen nicht-flüchtigen Bestandteile des eingesetzten Materials oder deren nicht-flüchtigen Reaktionsprodukte, insbesondere in Form von Chloriden, sowie nicht umgesetztes Eisenphosphat-haltiges Material sowie nicht umgesetzter Kohlenstoff. Zur weiteren Aufarbeitung des Rückstandes und Rückgewinnung von Wertstoffen kann der Rückstand teilweise in Wasser aufgelöst werden, vorzugsweise bei einer Temperatur von 10 bis 40°C und von unlöslichen Bestandteilen getrennt werden.

Als unlöslicher Rückstand des erfindungsgemäßen Verfahrens ist insbesondere Graphit oder anderer, zugesetzter oder vorhandener Kohlenstoff zu nennen, sofern dieser in dem eingesetzten Material enthalten war, sowie ggf. Titandioxid. Die wasserlöslichen Bestandteile können dann ggf. nach Ermittlung ihrer möglichen Existenz nach dem klassischen H₂S-Trennungsgang voneinander in Form ihre Sulfide, Chloride, Phosphate, Fluoride oder sonstigen Fällungsverbindungen getrennt und isoliert werden. So können Mangan und Aluminium, sofern im Rückstand vorhanden, sowie Nickel bei unterschiedlichen pH-Werten als Sulfide gefällt und anschließend nach Trocknung zu den entsprechenden Sulfaten an Luft geröstet werden. Das Titan kann in Form des Dioxids im unlöslichen Rückstand abgetrennt werden.

Die erhaltenen Sulfate können zur Herstellung von Eisenphosphaten im Sinne dieser Erfindung wiederverwendet werden.

### Beispiele

**Analytik:** Die Analytik auf Phosphorverbindungen, insbesondere POCl₃ und PCl₃, wird vorzugsweise mittels online-IR im Abgasstrom durchgeführt. Dazu wird der Gasstrom aus dem Reaktor durch eine Glasküvette geleitet, die den Durchgang von IR-Strahlung in einem möglichst weiten Spektralbereich erlaubt, zum Beispiel durch den Einsatz von Fenstern aus einer Thaliumverbindung. Durch vorhergehende Kalibrierung (Totalverdampfen von bekannten PCl₃ respektive POCl₃-Masseströmen in einen Stickstoff-Gasstrom mit bekanntem Volumenstroms und Quantifizierung charakteristischer Banden im IR-Spektrum) kann der Masseanteil der Phosphorverbindungen im Abgasstrom ermittelt werden.

Angegebene Gewichtsprozente der verschiedenen Elemente wurden durch ICP-OES Messungen ermittelt. Dazu wird eine gewogene Menge der Feststoffes zunächst in einer bekannten Menge einer Säure gelöst, die Konzentration der angegebenen Elemente in einem ICP gegen eine Kalibriermessung ermittelt und aus dieser auf den Gehalt des Elementes im Feststoff zurückgerechnet.

### Beispiel

120g Lithiumeisenphosphat wird mit 1 Liter 1 molarer Essigsäure und 250g 30%iger H₂O₂ für 30 Minuten bei Raumtemperatur gerührt. Dann wird der Niederschlag abgesaugt, mit Wasser dreimal gewaschen und getrocknet.

55g des oben erzeugten Eisenphosphates-haltigen Materials (mit folgenden Analysendaten: Fe 36 Gew.-%, P 21 Gew.-%, Li < 1 Gew.-%) werden mit 6,6g feingemahlenem Kohlenstoff (Aktivkohle) trocken innig vermischt. Der Wassergehalt liegt bei <1 Gew.-%.

Das Pulvergemisch wird in einem beheizten Röhrenreaktor (aus Quarzglas, 120mm Durchmesser) in einer Quarzschale im Stickstoffstrom auf 600°C erhitzt. Dann wird auf einen Chlorgasstrom von 100ml/min umgeschaltet. Es wird bei dieser Temperatur 6h gehalten. Ab etwa 10 Minuten Reaktionszeit erscheinen im IR-Spektrum der Gasphase zwei Adsorptionsbanden bei 593 cm⁻¹ und bei 1322 cm⁻¹, die beide POCl₃ zugeordnet werden können.

Das erhaltene Eisenchlorid wird auf einer 100°C kühlen Fläche zusammen mit Teilen des entstandenen POCl₃ aus dem Abgasstrom abgeschieden und anschließend gemeinsam gesammelt und mit Schwefelsäure zu Eisensulfat und Phosphorylchlorid umgesetzt. Das Gemisch wird destilliert.

Das erhaltene Eisensulfat kann zur Herstellung von neuem Eisenphosphat oder LFP/LFMP verwendet werden.

Das erhaltene Destillat, bestehend aus POCl₃, kann für chemische Verfahren, beispielsweise zur Herstellung von Phosphorsäureestern, eingesetzt werden. Ebenfalls kann das POCl₃ zur Herstellung von Polyphosphorsäure oder Phosphorsäure verwendet werden. Je nach Verfahren sind dies mögliche Einsatzstoffe zur Herstellung von LFP oder LFMP.

In der Schale bleibt ein Rückstand an nicht umgesetztem Eisenphosphat und überschüssigem Kohlenstoff zurück (zusammen 22g).

## Patentansprüche

1. Verfahren zur Gewinnung von Phosphoroxychlorid und Eisenchlorid aus Eisenphosphat-haltigem Materialien, **dadurch gekennzeichnet, dass** man
i) ein Eisenphosphat-haltiges Material in Gegenwart einer Kohlenstoff-Quelle mit Chlorgas bei einer Temperatur von 300 bis 900°C umsetzt und
ii) die gebildeten Chlorphosphorverbindungen Phosphoroxychlorid und ggf. Phosphortrichlorid und Eisenchlorid im Abgasstrom ableitet, und aus dem Abgasstrom Eisenchlorid, Phosphoroxychlorid und ggf. Phosphortrichlorid dadurch trennt, dass
iii) das Eisenchlorid durch Resublimation abgeschieden wird und
iv) die Chlorphosphorverbindungen Phosphoroxychlorid und ggf. Phosphortrichlorid durch Kondensation abgeschieden werden .

2. Verfahren nach Anspruch 1, **dadurch gekennzeichnet, dass** das aus dem in Schritt iii) isolierte Eisenchlorid mit Schwefelsäure umgesetzt wird, wobei gegebenenfalls vorhandene Chlorphosphorverbindungen freigesetzt und dann ggf. kondensiert werden.

3. Verfahren nach wenigstens einem der Ansprüche 1 bis 2, **dadurch gekennzeichnet, dass** das Eisenphosphat zu wenigstens 97 Gew.-%, besonders bevorzugt zu wenigstens 99,5 Gew.-% aus den Elementen Eisen, Phosphor, Mangan, Aluminium, Nickel, Titan und Sauerstoff, insbesondere aus den Elementen Eisen, Phosphor, Mangan und Sauerstoff und besonders bevorzugt aus den Elementen Eisen, Phosphor und Sauerstoff besteht.

4. Verfahren nach wenigstens einem der Ansprüche 1 bis 3, **dadurch gekennzeichnet, dass** als Eisenphosphat wenigstens eines ausgewählt wird aus der Gruppe bestehend aus Eisen(III)-phosphat FePO₄, Eisen(II)-phosphat, insbesondere FePO₄·2H₂O, insbesondere Fe₃(PO₄)₂·8H₂O und Eisen(III)-pyrophosphat, insbesondere Fe₄(P₂O₇)₃, sowie Verbindungen der allgemeinen Formel FeₓMe_{y}PO₄, wobei unter Me Mangan, Aluminium, Nickel sowie Titan, insbesondere Mangan verstanden wird und x zwischen 0<x≤3 und y zwischen 0≤y<2,5 liegt.

5. Verfahren nach wenigstens einem der Ansprüche 1 bis 4, **dadurch gekennzeichnet, dass** als Eisenphosphat-haltige Material ein Material, enthaltend einen Anteil von 5 bis 100 Gew.-%, vorzugsweise 40 bis 99 Gew.-%, insbesondere 50 bis 99 Gew.-%, besonders bevorzugt von 70 bis 99 Gew.-% an Eisenphosphat, verwendet wird.

6. Verfahren nach wenigstens einem der Ansprüche 1 bis 5, **dadurch gekennzeichnet, dass** als Eisenphosphat-haltige Material ein Material, enthaltend einen Anteil von 5 bis 100 Gew.-%, vorzugsweise 40 bis 99 Gew.-%, insbesondere 50 bis 99 Gew.-%, besonders bevorzugt von 70 bis 99 Gew.-% an wenigstens einem Eisenphosphat aus der Gruppe bestehend aus Eisen(III)-phosphat FePO₄, Eisen(II)-phosphat, insbesondere FePO₄·2H₂O, insbesondre Fe₃(PO₄)₂·8H₂O und Eisen(III)-pyrophosphat, insbesondere Fe₄(P₂O₇)₃ verwendet wird.

7. Verfahren nach wenigstens einem der Ansprüche 1 bis 6, **dadurch gekennzeichnet, dass** als Eisenphosphat-haltiges Material ein Material verwendet, enthaltend
0 bis 35 Gew.-% Mn, gerechnet als elementares Mangan,
0 bis 35 Gew.-% Al, gerechnet als elementares Aluminium,
0 bis 35 Gew.-% Ni, gerechnet als elementares Nickel,
0 bis 35 Gew.-% Ti, gerechnet als elementares Titan,
0 bis 55 Gew. %, vorzugsweise 0 bis 40 Gew.-%, insbesondere 1 bis 30 Gew.-% Kohlenstoff.

8. Verfahren nach wenigstens einem der Ansprüche 1 bis 7, **dadurch gekennzeichnet, dass** als Eisenphosphat-haltiges Material ein Material verwendet wird, enthaltend weniger als 1 Gew.-% Li, gerechnet als elementares Lithium.

9. Verfahren nach wenigstens einem der Ansprüche 1 bis 8, **dadurch gekennzeichnet, dass** die Kohlenstoffquelle ausgewählt wird aus der Gruppe Graphit, Ruß, Kohle, Koks, Aktivkohle, Kohlenmonoxid, Öle, Methan, Polyethylenglykol, Bioabfälle, und insbesondere Klärschlamm.

10. Verfahren nach wenigstens einem der Ansprüche 1 bis 9, **dadurch gekennzeichnet, dass** das Eisenphosphat-haltige Material 1 bis 55 Gew.-%, vorzugsweise 1 bis 40 Gew.-% an Kohlenstoff, insbesondere Graphit und/oder Aktivkohle und/oder Ruß enthält.

11. Verfahren nach wenigstens einem der Ansprüche 1 bis 10, **dadurch gekennzeichnet, dass** das Eisenphosphat-haltige Material ein molares Kohlenstoff-zu-Phosphor-Verhältnis von größer gleich 1,5, vorzugsweise von 1,5 bis 20, besonders bevorzugt von 1,5 bis 10, insbesondere von 1,5 bis 5, ganz besonders bevorzugt von 1,5 bis 4 besitzt.

12. Verfahren nach wenigstens einem der Ansprüche 1 bis 11, **dadurch gekennzeichnet, dass** der in Schritt ii) abgeleitete Abgasstrom Phosphoroxychlorid und Phosphortrichlorid enthält, vorzugsweise in einem Gewichtsverhältnis von 10 zu 1 bis 1 zu 10.

13. Verfahren nach wenigstens einem der Ansprüche 1 bis 12, **dadurch gekennzeichnet, dass** das Eisenchlorid in Schritt iii) bei einer Temperatur kleiner gleich 300°C abgeschieden wird.

## Claims

1. Method of obtaining phosphorus oxychloride and iron chloride from iron phosphate-containing materials, **characterized in that**
i) an iron phosphate-containing material is reacted in the presence of a carbon source with chlorine gas at a temperature of 300 to 900°C and
ii) the chlorine-phosphorus compounds formed, in the form of phosphorus oxychloride and any phosphorus trichloride and iron chloride, are led off in the offgas stream, and iron chloride, phosphorus oxychloride and any phosphorus trichloride are separated from the offgas stream **in that**
iii) the iron chloride is separated out by resublimation and
iv) the chlorine-phosphorus compounds, in the form of phosphorus oxychloride and any phosphorus trichloride, are separated out by condensation.

2. Method according to Claim 1, **characterized in that** the iron chloride isolated in step iii) is reacted with sulfuric acid, with release and then optionally condensation of any chlorine-phosphorus compounds present.

3. Method according to at least one of Claims 1 and 2, **characterized in that** the iron phosphate consists to an extent of at least 97% by weight, more preferably to an extent of at least 99.5% by weight, of the elements iron, phosphorus, manganese, aluminium, nickel, titanium and oxygen, especially of the elements iron, phosphorus, manganese and oxygen, and more preferably of the elements iron, phosphorus and oxygen.

4. Method according to at least one of Claims 1 to 3, **characterized in that** the iron phosphate is at least one selected from the group consisting of iron(III) phosphate FePO₄, iron(II) phosphate, especially FePO₄·2H₂O, especially Fe₃(PO₄)₂·8H₂O, and iron(III) pyrophosphate, especially Fe₄(P₂O₇)₃, and compounds of the general formula FeₓMe_{y}PO₄ where Me means manganese, aluminium, nickel and titanium, especially manganese, and x is between 0 < x ≤ 3 and y is between 0 ≤ y < 2.5.

5. Method according to at least one of Claims 1 to 4, **characterized in that** the iron phosphate-containing material used is a material containing a proportion of 5% to 100% by weight, preferably 40% to 99% by weight, especially 50% to 99% by weight, more preferably 70% to 99% by weight, of iron phosphate.

6. Method according to at least one of Claims 1 to 5, **characterized in that** the iron phosphate-containing material used is a material containing a proportion of 5% to 100% by weight, preferably 40% to 99% by weight, especially 50% to 99% by weight, more preferably 70% to 99% by weight, of at least one iron phosphate from the group consisting of iron(III) phosphate FePO₄, iron(II) phosphate, especially FePO₄·2H₂O, especially Fe₃(PO₄)₂·8H₂O and iron(III) pyrophosphate, especially Fe₄(P₂O₇)₃.

7. Method according to at least one of Claims 1 to 6, **characterized in that** the iron phosphate-containing material used is a material containing
0% to 35% by weight of Mn, calculated as elemental manganese,
0% to 35% by weight of Al, calculated as elemental aluminium,
0% to 35% by weight of Ni, calculated as elemental nickel,
0% to 35% by weight of Ti, calculated as elemental titanium,
0% to 55% by weight, preferably 0% to 40% by weight, in particular 1% to 30% by weight, of carbon.

8. Method according to at least one of Claims 1 to 7, **characterized in that** the iron phosphate-containing material used is a material containing less than 1% by weight of Li, calculated as elemental lithium.

9. Process according to at least one of Claims 1 to 8, **characterized in that** the carbon source is selected from the group of graphite, soot, charcoal, coke, activated carbon, carbon monoxide, oils, methane, polyethylene glycol, biowastes, and in particular sewage sludge.

10. Method according to at least one of Claims 1 to 9, **characterized in that** the iron phosphate-containing material contains 1% to 55% by weight, preferably 1% to 40% by weight, of carbon, especially graphite and/or activated carbon and/or soot.

11. Method according to at least one of Claims 1 to 10, **characterized in that** the iron phosphate-containing material has a molar carbon-to-phosphorus ratio of not less than 1.5, preferably of 1.5 to 20, more preferably of 1.5 to 10, especially of 1.5 to 5, most preferably of 1.5 to 4.

12. Method according to at least one of Claims 1 to 11, **characterized in that** the offgas stream led off in step ii) contains phosphorus oxychloride and phosphorus trichloride, preferably in a weight ratio of 10:1 to 1:10.

13. Method according to at least one of Claims 1 to 12, **characterized in that** the iron chloride is separated out in step iii) at a temperature of not more than 300°C.

## Revendications

1. Procédé d'obtention d'oxychlorure de phosphore et de chlorure de phosphore à partir de matériaux contenant du phosphate de fer, **caractérisé en ce qu'**on
i) transforme un matériau contenant du phosphate de fer en présence d'une source de carbone avec du chlore gazeux à une température de 300 à 900°C et
ii) évacue les composés de phosphore de chlore formés, oxychlorure de phosphore et le cas échéant trichlorure de phosphore, et le chlorure de fer dans un effluent gazeux et sépare, à partir de l'effluent gazeux, le chlorure de fer, l'oxychlorure de phosphore et le cas échéant le trichlorure de phosphore **en ce que**
iii) le chlorure de fer est séparé par resublimation et
iv) les composés de phosphore de chlore, oxychlorure de phosphore et le cas échéant trichlorure de phosphore, sont séparés par condensation.

2. Procédé selon la revendication 1, **caractérisé en ce que** le chlorure de fer isolé à partir de l'étape iii) est transformé avec de l'acide sulfurique, les composés de phosphore de chlore le cas échéant présents étant libérés et ensuite le cas échéant condensés.

3. Procédé selon au moins l'une des revendications 1 à 2, **caractérisé en ce que** le phosphate de fer est constitué, à raison d'au moins 97% en poids, de manière particulièrement préférée à raison d'au moins 99,5% en poids, des éléments fer, phosphore, manganèse, aluminium, nickel, titane et oxygène, en particulier des éléments fer, phosphore, manganèse et oxygène et de manière particulièrement préférée des éléments fer, phosphore et oxygène.

4. Procédé selon au moins l'une des revendications 1 à 3, **caractérisé en ce qu'**on choisit, comme phosphate de fer, au moins un phosphate choisi dans le groupe constitué par le phosphate de fer (III) FePO₄, le phosphate de fer (II), en particulier FePO₄.2H₂O, en particulier Fe₃(PO₄)₂.8H₂O et le pyrophosphate de fer (III), en particulier Fe₄(P₂O₇)₃, ainsi que par les composés de formule générale FeₓMe_{y}PO₄, Me représentant manganèse, aluminium, nickel ainsi que titane, en particulier manganèse, et x étant situé entre 0<x≤3 et y entre 0≤y<2,5.

5. Procédé selon au moins l'une des revendications 1 à 4, **caractérisé en ce qu'**on utilise, comme matériau contenant du phosphate de fer, un matériau contenant une proportion de 5 à 100% en poids, de préférence de 40 à 99% en poids, en particulier de 50 à 99% en poids, de manière particulièrement préférée de 70 à 99% en poids, de phosphate de fer.

6. Procédé selon au moins l'une des revendications 1 à 5, **caractérisé en ce qu'**on utilise, comme matériau contenant du phosphate de fer, un matériau contenant une proportion de 5 à 100% en poids, de préférence de 40 à 99% en poids, en particulier de 50 à 99% en poids, de manière particulièrement préférée de 70 à 99% en poids, d'au moins un phosphate de fer du groupe constitué par le phosphate de fer (III) FePO₄, le phosphate de fer (II), en particulier FePO₄.2H₂O, en particulier Fe₃(PO₄)₂.8H₂O et le pyrophosphate de fer (III), en particulier Fe₄(P₂O₇)₃.

7. Procédé selon au moins l'une des revendications 1 à 6, **caractérisé en ce qu'**on utilise, comme matériau contenant du phosphate de fer, un matériau contenant
0 à 35% en poids de Mn, calculé sous forme de manganèse élémentaire,
0 à 35% en poids d'Al, calculé sous forme d'aluminium élémentaire,
0 à 35% en poids de Ni, calculé sous forme de nickel élémentaire,
0 à 35% en poids de Ti, calculé sous forme de titane élémentaire,
0 à 55% en poids, de préférence 0 à 40% en poids, en particulier 1 à 30% en poids de carbone.

8. Procédé selon au moins l'une des revendications 1 à 7, **caractérisé en ce qu'**on utilise, comme matériau contenant du phosphate de fer, un matériau contenant moins de 1% en poids de lithium, calculé sous forme de lithium élémentaire.

9. Procédé selon au moins l'une des revendications 1 à 8, **caractérisé en ce que** la source de carbone est choisie dans le groupe graphite, suie, charbon, coke, charbon actif, monoxyde de carbone, huiles, méthane, polyéthylèneglycol, déchets biologiques et en particulier boues d'épuration.

10. Procédé selon au moins l'une des revendications 1 à 9, **caractérisé en ce que** le matériau contenant du phosphate de fer contient 1 à 55% en poids, de préférence 1 à 40% en poids de carbone, en particulier de graphite et/ou de charbon actif et/ou de suie.

11. Procédé selon au moins l'une des revendications 1 à 10, **caractérisé en ce que** le matériau contenant du phosphate de fer présente un rapport molaire de carbone à phosphore supérieur ou égal à 1,5, de préférence de 1,5 à 20, de manière particulièrement préférée de 1,5 à 10, en particulier de 1,5 à 5, de manière tout particulièrement préférée de 1,5 à 4.

12. Procédé selon au moins l'une des revendications 1 à 11, **caractérisé en ce que** l'effluent gazeux évacué dans l'étape ii) contient de l'oxychlorure de phosphore et du trichlorure de phosphore, de préférence dans un rapport pondéral de 10:1 à 1:10.

13. Procédé selon au moins l'une des revendications 1 à 12, **caractérisé en ce que** le chlorure de fer est séparé dans l'étape iii) à une température inférieure ou égale à 300°C.
